# FASCICULE DE BREVET EUROPEEN

(11) **EP 3 064 708 B1**
(45) Date de publication et mention de la délivrance du brevet: **02.10.2019**
(21) Numéro de dépôt: 16156552.8
(22) Date de dépôt: 19.02.2016
(51) Int. Cl.: F01D 5/14, F01D 5/28, F04D 29/32

(54) **AUBE COMPOSITE DE COMPRESSEUR DE TURBOMACHINE AXIALE AVEC UNE FEUILLE DE RENFORT ET TURBOMACHINE COMPRENANT UNE TELLE AUBE**
VERBUNDWERKSTOFFSCHAUFEL EINES KOMPRESSORS EINES AXIALEN TURBOTRIEBWERKS MIT EINEM VERSTÄKUNGSBLECH UND ZUGEHÖRIGE TURBOMACHINE MIT SOLCH EINE SCHAUFEL.
COMPOSITE VANE OF AN AXIAL TURBINE-ENGINE COMPRESSOR WITH A REINFORCING SHEET AND TURBOMACHINE WITH COMPRISING SUCH A VANE

(30) Priorité: 05.03.2015 BE 201505121
(43) Date de publication de la demande: 07.09.2016
(73) Titulaire: Safran Aero Boosters SA, 4041 Herstal (BE)
(72) Inventeur: CORTEQUISSE, Jean-François, 3870 Heers (BE)
(74) Mandataire: Lecomte & Partners

(56) Documents cités:
- EP-A1- 0 764 764
- EP-A1- 2 182 168
- EP-A2- 1 764 476
- EP-A2- 1 887 187
- EP-A2- 1 980 714
- EP-A2- 2 243 929
- EP-A2- 2 256 296
- US-A- 4 006 999

## Description

### Domaine technique

L'invention a trait au domaine des aubes de turbomachines pour aéronef. Plus précisément, l'invention traite des aubes composites avec une structure de renfort. L'invention a également trait à une turbomachine axiale avec une aube selon l'invention.

### Technique antérieure

Les compresseurs et les turbines d'une turbomachine axiale comprennent chacun plusieurs rangées annulaires d'aubes rotoriques. Ces dernières permettant d'accélérer, de ralentir, de redresser ou bien dévier un flux d'air annulaire. Ces actions permettent de comprimer le flux, ou d'en récupérer une énergie motrice. Les aubes doivent être légères pour réduire la masse de la turbomachine, en particulier dans le domaine aéronautique. L'allègement est également synonyme de réduction d'inertie du rotor.

L'optimisation de la masse d'une aube doit néanmoins respecter des critères de résistance mécanique et de résistance thermique. Une aube doit résister à des vibrations et éventuellement à des ingestions dans la turbomachine. En sus, les aubes rotoriques sont confrontées aux efforts centrifuges. Pour réaliser des aubes sur-mesure qui répondent aux exigences précitées, il est connu de concevoir des aubes dotées de renforts

Le document EP 1 450 006 A1 divulgue une aube de compresseur de turboréacteur d'aéronef. L'aube présente un corps et un renfort pour son bord d'attaque. Le corps est réalisé en un matériau composite chargé en fibres, tandis que le renfort est en métal. Le renfort rapporté est partiellement ancré dans l'aube, ce qui permet de protéger l'aube contre l'érosion au niveau de son bord d'attaque. Cependant, la résistance aux impacts et la rigidité globale d'une telle aube restent limitées. La présence de peaux sur les surfaces externes alourdi l'aube.

Le document EP2256296A2 divulgue une pale de soufflante de turbomachine. La pale présente un bord d'attaque, un bord de fuite, une tête et une base. La pale comprend un renfort réalisé en alliage de titane, et deux blocs de revêtements réalisés en matériau composite avec des fibres renforcées par une résine.

Les documents EP0764764 (A1) ; EP2182168 (A1); EP1764476 (A2) ; EP2243929 (A2) ; EP1980714 (A2) ; EP1887187 (A2) et US4006999 (A) divulguent des aubes de turbomachines. Ces aubes comprennent chacune un bord d'attaque, un bord de fuite, et un renfort formant le bord d'attaque.

### Résumé de l'invention

### Problème technique

L'invention a pour objectif de résoudre au moins un des problèmes posés par l'art antérieur. Plus précisément, l'invention a pour objectif d'améliorer la rigidité d'une aube de turbomachine. L'invention a également pour objectif d'optimiser la résistance, la masse, le coût, la géométrie d'une aube de turbomachine.

### Solution technique

De manière générale, l'invention propose une aube avec une nappe de renfort, ou feuille ; avec deux blocs, ou portions de corps, de part et d'autre de la feuille ; la nappe forme le bord de fuite et le bord d'attaque de l'aube en étant épaissie sur ce dernier bord, les blocs forment la surface intrados et la surface extrados de l'aube.

L'invention a pour objet une aube composite de turbomachine, notamment de compresseur de turbomachine axiale, l'aube comprenant : une pale destinée à s'étendre radialement dans un flux de la turbomachine, la pale comportant un bord d'attaque, un bord de fuite et un corps placé entre le bord d'attaque et le bord de fuite ; et un renfort formant le bord d'attaque de la pale ; remarquable en ce que le renfort du bord d'attaque comprend une feuille de renfort avec une épaisseur essentiellement constante, qui s'étend du bord d'attaque au bord de fuite et qui est disposée dans l'épaisseur du corps de sorte à le traverser.

L'invention a pour objet une aube composite de turbomachine, notamment de compresseur de turbomachine axiale, l'aube comprenant : une pale destinée à s'étendre radialement dans un flux de la turbomachine, la pale comportant un bord d'attaque, un bord de fuite et un corps placé entre le bord d'attaque et le bord de fuite ; et un renfort formant le bord d'attaque de la pale ; remarquable en ce que le renfort du bord d'attaque comprend une feuille de renfort qui s'étend du bord d'attaque au bord de fuite et qui est disposée dans l'épaisseur du corps de sorte à le traverser.

Selon un mode avantageux de l'invention, la pale comprend une surface intrados et une surface extrados qui s'étendent du bord d'attaque au bord de fuite, la feuille balayant la majorité, préférentiellement essentiellement toute la surface intrados et toute la surface extrados de l'aube, éventuellement le corps forme au moins partiellement la surface intrados et/ou la surface extrados de la pale.

Selon un mode avantageux de l'invention, le renfort comprend une portion amont, notamment une coquille de protection, formant le bord d'attaque de l'aube, la feuille et ladite portion amont étant joints, préférentiellement la feuille et ladite portion amont sont venues de matière.

Selon un mode avantageux de l'invention, la portion amont forme une couche de matière d'épaisseur majoritairement constante, éventuellement la feuille s'étend davantage en aval que le corps.

Selon un mode avantageux de l'invention, la feuille comprend un matériau granuleux, préférentiellement le renfort est réalisé par fabrication additive, éventuellement à base de poudre.

Selon un mode avantageux de l'invention, la feuille est métallique, elle peut comprendre du titane ; et le corps est réalisé en un matériau polymère, éventuellement chargé en fibres.

Selon un mode avantageux de l'invention, le renfort forme un insert au moins partiellement disposé dans le corps, la feuille séparant le corps en deux parties, le renfort comprend des ouvertures formées dans la feuille, préférentiellement les parties du corps présentent une continuité de matière via les ouvertures.

Selon un mode avantageux de l'invention, le corps recouvre les deux faces de la feuille, préférentiellement sur la majorité de la surface de chaque face de feuille.

Selon un mode avantageux de l'invention, la feuille est une tôle qui divise le corps, et la feuille s'étend sur toute la hauteur radiale du bord d'attaque et/ou toute la hauteur radiale du bord de fuite de l'aube.

Selon un mode avantageux de l'invention, le corps présente un empilement radial de profils aérodynamiques avec des lignes de cambrure moyennes, au moins une ou chaque ligne de cambrure moyenne étant disposée dans l'épaisseur de la feuille, et/ou au moins une ou chaque ligne de cambrure moyenne étant parallèle à la feuille.

Selon un mode avantageux de l'invention, l'aube comprend une plateforme de fixation délimitant radialement le renfort, la plateforme et le renfort étant venus de matière, éventuellement la plateforme comprend une plaque avec un rebord de sorte à délimiter un espace à l'intérieur de la plateforme.

Selon un mode avantageux de l'invention, l'aube comprend une languette de fixation, éventuellement disposée radialement à l'opposé de la plateforme de fixation, la languette de fixation prolonge radialement la feuille et comprend des moyens de fixation, tel un orifice de fixation, destiné à coopérer avec une virole interne statorique.

Selon un mode avantageux de l'invention, la plateforme comprend des nervures de renfort en surépaisseur de la plaque de la plateforme et qui s'étendent jusqu'au niveau de la feuille, et/ou une structure en treillis tridimensionnel renforçant la plateforme, et/ou un bloc massif destiné à être soudé à un support.

Selon un mode avantageux de l'invention, la plateforme comprend un prolongement de la feuille, la plaque de la plateforme séparant la feuille du prolongement, le prolongement étant entouré par le rebord de la plaque, éventuellement la plateforme comprend un axe de fixation joint au prolongement de la feuille, ou l'axe de fixation est à distance radialement du prolongement de la feuille.

Selon un mode avantageux de l'invention, le corps épouse chaque surface des faces de la feuille, éventuellement sur toutes les surfaces des faces de la feuille.

Selon l'invention, la feuille présente essentiellement une épaisseur constante, sur la majorité ou sur essentiellement toute sa surface.

Selon l'invention, la feuille forme le bord de fuite de l'aube, éventuellement sur toute sa hauteur radiale, et/ou comprend une portion amincie formant le bord de fuite.

Selon un mode avantageux de l'invention, la feuille est cambrée, et/ou vrillée, et/ou bombée.

Selon un mode avantageux de l'invention, l'épaisseur de la feuille est inférieure à la moitié de l'épaisseur moyenne de la pale de l'aube.

Selon un mode avantageux de l'invention, l'épaisseur de la feuille et/ou l'épaisseur de la coquille est/sont inférieure(s) ou égale(s) à 1 mm, préférentiellement inférieure(s) ou égale(s) à 0,50 mm, plus préférentiellement inférieure(s) ou égale(s) à 0,25 mm, éventuellement inférieure(s) ou égale(s) à 0,10 mm.

Selon un mode avantageux de l'invention, les parties du corps forment la majorité de la surface intrados et de la surface extrados.

Selon un mode avantageux de l'invention, l'épaisseur maximale de la portion amont du renfort est supérieure ou égale à l'épaisseur moyenne du corps ou de l'une des parties du corps.

Selon un mode avantageux de l'invention, le renfort et le corps forment un bloc de matière plein.

Selon un mode avantageux de l'invention, le renfort, notamment sa partie amont et/ou la coquille, s'étend du côté intrados et du côté extrados de l'aube.

Selon un mode avantageux de l'invention, la surface d'au moins une ou de chaque face de la feuille est généralement lisse.

Selon un mode avantageux de l'invention, le renfort et le corps sont réalisés en deux matériaux différents, préférentiellement le matériau du corps présente une densité inférieure à celle du matériau du renfort, plus préférentiellement au moins deux fois moins denses.

L'invention a également pour objet une turbomachine comprenant au moins une aube, remarquable en ce que la au moins une aube est conforme à l'invention, préférentiellement ladite aube est une aube de redresseur de compresseur basse pression.

### Avantages apportés

L'invention permet d'augmenter la rigidité de l'aube grâce à la présence de la feuille de renfort. Sa présence permet de former une aube composite avec deux matériaux différents ; de sorte à apporter à la fois de la rigidité et de la légèreté. Ainsi, les profils aérodynamiques de l'aube risquent moins de s'arquer ou de s'aplatir sous l'effet de l'écoulement du fluide. La feuille et le corps peuvent être réalisés en deux matériaux différents de sorte à amortir les vibrations.

Bien entendu, le traitement du bord d'attaque limite l'érosion, mais il permet également de rigidifier la feuille en y formant une cornière de renfort de sorte à éviter les flexions vers l'intrados ou l'extrados. Réciproquement, la feuille évite que la portion amont ne se déforme vers l'aval. Ainsi, la feuille et la portion amont se renforcent mutuellement. Leur jonction perpendiculaire optimise ce renfort. Le renfort joue un rôle de structure ; d'âme de renfort.

En plus d'alléger la feuille, les orifices de la feuille augmentent la cohésion du corps puisqu'il traverse ces orifices. L'alignement des orifices permet de préserver la rigidité de la feuille en ménageant des zones de renfort.

### Brève description des dessins

La figure 1 représente une turbomachine axiale selon l'invention.
La figure 2 est un schéma d'un compresseur de turbomachine selon l'invention.
La figure 3 illustre une aube selon l'invention.
La figure 4 illustre une plateforme d'aube selon l'invention.
La figure 5 esquisse une coupe de l'aube suivant l'axe 5-5 tracé sur la figure 3 selon l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine.

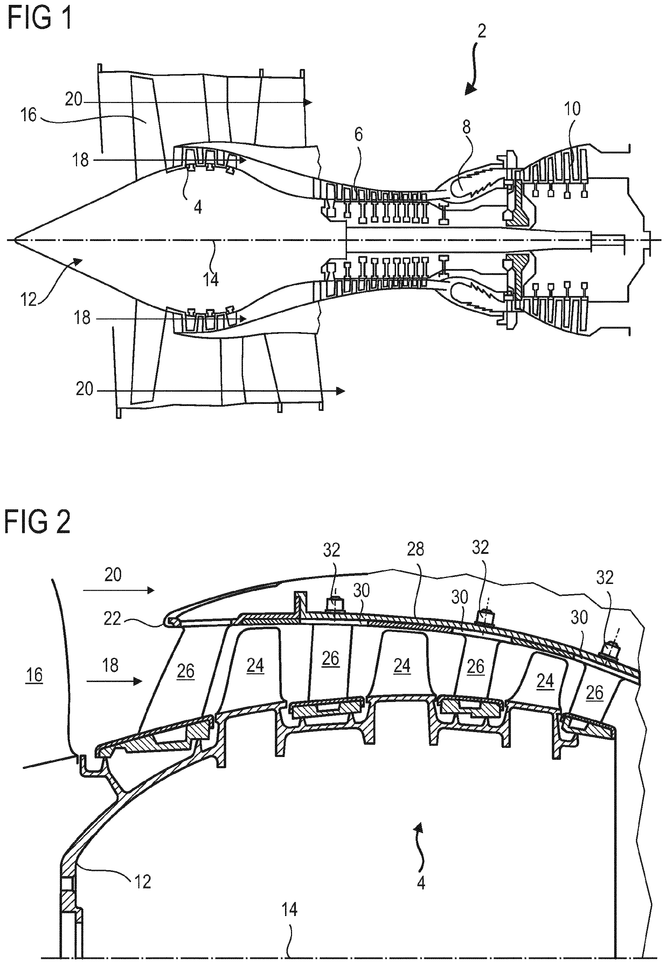

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 4. On peut y observer le bec de séparation 22 du flux primaire 18 et du flux secondaire 20. Le rotor 12 comprend plusieurs rangées d'aubes rotoriques 24, en l'occurrence trois.

Le compresseur 4 comprend plusieurs redresseurs, en l'occurrence quatre, qui contiennent chacun une rangée annulaire d'aubes statoriques 26. Les redresseurs sont associés au fan ou à une rangée d'aubes rotoriques 24 pour redresser le flux d'air, de sorte à convertir la vitesse du flux en pression statique.

Les aubes statoriques 26 s'étendent essentiellement radialement depuis un carter extérieur 28, et peuvent y être fixées à l'aide de leurs plateformes de fixation 30 qui sont plaquées contre la paroi externe du carter 28. A cet effet, les plateformes de fixation 30 peuvent comprendre un axe de fixation 32 ou un bloc de matière destiné à être soudé au carter 28 ou à une virole externe. Les axes de fixation 32 peuvent être liés par un lockbolt ou un écrou.

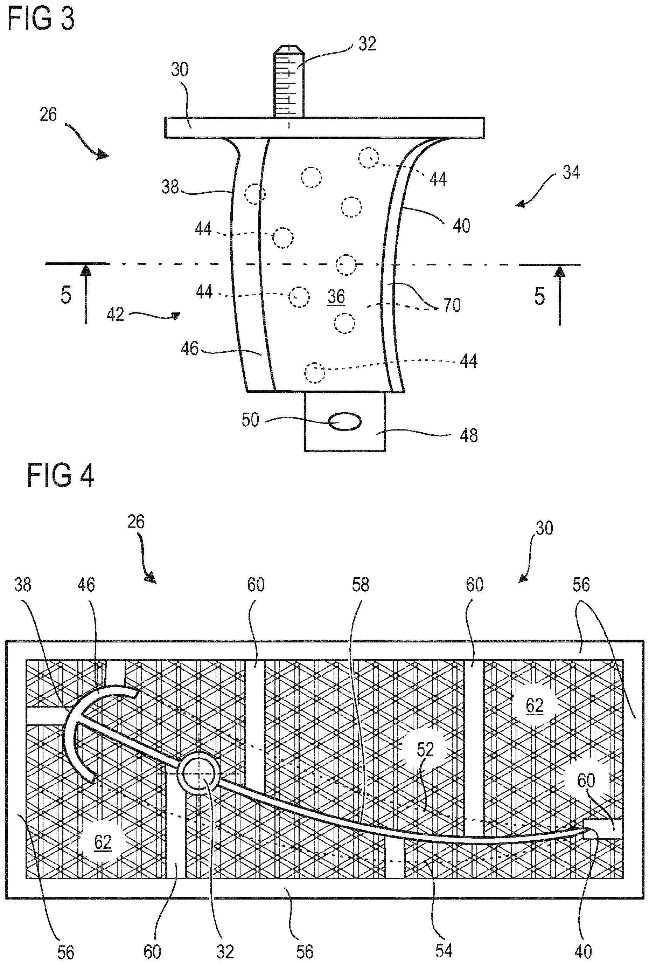

La figure 3 représente une aube selon l'invention, telle une aube du compresseur représenté sur la figure 2. L'aube est observée latéralement ; selon la direction circonférentielle. L'aube qui est ici représentée est une aube statorique 26, il pourrait également s'agir d'une aube rotorique, par exemple soudée sur un tambour. L'aube pourrait être une aube de turbine.

L'aube 26 comprend une pale 34 destinée à s'étendre radialement dans le flux annulaire primaire 18 de la turbomachine. La pale 34 comporte un corps 36 avec un bord d'attaque 38 et un bord de fuite 40, une surface intrados et une surface extrados ; ces surfaces s'étendant du bord d'attaque 38 au bord de fuite 40. La surface intrados est incurvée pour dévier le flux 18, afin de l'accélérer ou de le ralentir.

La pale 34 comporte en outre un renfort 42 au moins partiellement disposé dans le corps 36 de sorte à le renforcer. A cet effet, le renfort 42 présente une feuille 70 insérée dans l'épaisseur du corps 36 en le traversant d'amont en aval. La feuille 70 s'étend du bord d'attaque 38 au bord de fuite 40 de l'aube 26, par exemple sur toute la hauteur radiale de la pale 34 de l'aube. La feuille 70 peut s'étendre au droit de toute la surface intrados et de toute la surface extrados de l'aube 26. La feuille 70 peut comprendre des ouvertures 44 réparties sur sa surface. Les ouvertures 44 sont traversées par le corps 36 pour améliorer la cohésion entre la feuille et le corps.

En amont, le renfort 42 comprend une portion amont 46 formant le bord d'attaque 38. La portion amont 46 est prolongée en aval par la feuille 70. La feuille 70 forme le bord de fuite 40 de l'aube, et s'étend plus en aval que le corps 36. Le renfort 42 peut être venu de matière.

L'aube 26 peut comprendre une plateforme de fixation 30, par exemple en forme de plaque. La plateforme 30 délimite radialement la pale 34, et permet de délimiter radialement le flux primaire 18. La plateforme 30 peut être prolongée par un ou plusieurs axe(s) de fixation 32.

L'aube 26 peut présenter une languette de fixation 48, éventuellement avec un moyen de fixation 50. La languette 48 peut permettre d'y ancrer une virole, par exemple une virole interne essentiellement reliée au stator d'une turbomachine grâce à sa rangée d'aubes 26 associée. La languette 48 peut présenter un orifice 50 pour y insérer un moyen de rétention telle une plaquette de rétention, un cerclage.

Le renfort 42 peut être réalisé en un matériau granuleux, et est avantageusement monobloc, par exemple venu de matière. Le renfort 42 peut être réalisé par frittage, ou selon un procédé de fabrication additive par couches afin d'améliorer la résistance mécanique tout en offrant une grande liberté de conception et une homogénéité de sa matière. Le renfort 42 peut également être produit en soudant des éléments, ou par fonderie. L'aube 26 peut être réalisée en surmoulant une résine sur le renfort 42 de sorte à y former le corps.

Le renfort 42 peut être réalisé à partir de poudre métallique telle une poudre titane pour offrir une résilience face aux impacts. Il pourrait également être produit en céramique pour augmenter la rigidité et la résistance à la température. Le corps 36 peut comprendre un matériau polymère, tel un composite à matrice organique chargée en fibres, et/ou un matériau céramique, et/ou un matériau métallique. Le corps 36 peut comprendre du PEI, du PEEK.

La figure 4 représente la plateforme 30 de l'aube 26 représentée figure 3, la plateforme 30 étant représentée depuis l'extérieur. La pale est représentée via sa surface intrados 52 et sa surface extrados 54 qui sont tracées en pointillés.

La plateforme comprend une plaque avec un rebord 56. Le rebord 56 forme une partie en saillie sur le tour de la plaque. Il entoure un espace creux de la plateforme 30 délimité d'un côté par la plaque. La plateforme 30 peut comprendre un prolongement radial 58 de la feuille et/ou de la portion amont disposé dans l'espace creux, la plaque de la plateforme 30 étant intercalée entre la feuille et le prolongement 58. Ce prolongement 58 apporte un surplus de matière renforçant l'aube 26 à la jonction entre le renfort et la plateforme 30.

La plateforme 30 peut comprendre une structure de rigidification dans sa zone creuse. La structure peut comprendre des nervures 60 et/ou un treillis tridimensionnel 62. Un tel treillis 62 peut comprendre des tiges orientées selon au moins trois directions pour former un repère tridimensionnel. Les nervures 60, tout comme le treillis 62, peuvent s'étendre depuis le prolongement radial 58 vers le rebord 56 de la plateforme 30, ils peuvent être en contact de l'axe de fixation 32. La structure de rigidification peut s'étendre dans tout l'espace creux de la plateforme 30.

Certaines nervures 60 peuvent s'étendre depuis le bord d'attaque 38 et/ou depuis le bord de fuite 40 de sorte à relier le rebord amont 56 et le rebord aval 56 de la plateforme 30 via le prolongement radial 58.

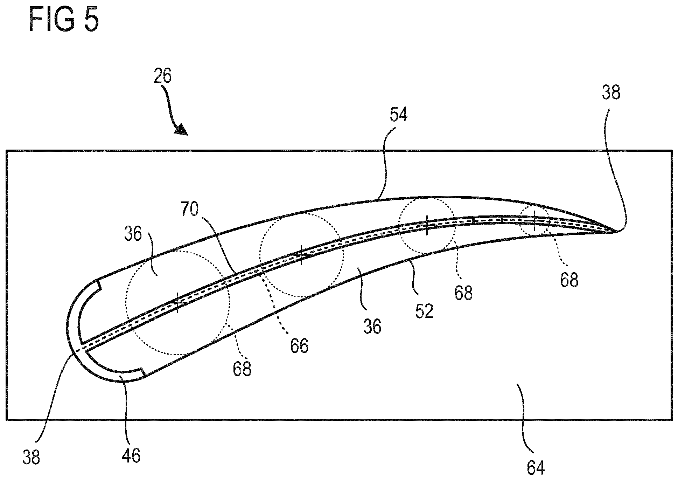

La figure 5 ébauche une coupe de l'aube suivant l'axe 5-5 tracé sur la figure 3. La coupe est observée vers l'extérieur, la plaque 64 de la plateforme 30 étant visible. La pale 34 de l'aube 26 comporte un empilement radial de profils aérodynamiques, les propriétés décrites en relation avec la présente figure peuvent être observées sur la majorité des profils aérodynamiques de l'aube 26, ou sur sensiblement tous les profils aérodynamiques de l'aube. L'intrados 52 est concave et l'extrados 54 est convexe. La ligne de cambrure moyenne 66 est courbée.

Par ligne de cambrure moyenne 66 on peut entendre la ligne formée, sur un même profil d'aube, par les points qui sont situés à mi-distance entre l'extrados 54 et l'intrados 52 telle que mesurée perpendiculairement à cette même ligne. Ou encore, le profil de l'aube 26 peut être représenté à l'aide de cercles 68 qui sont inscrits dans le profil de l'aube, qui touchent l'intrados 52 et l'extrados 54. La ligne qui passe par tous les centres des cercles 68 peut être considérée comme la ligne de cambrure moyenne 66.

La portion amont 46 peut s'étendre vers l'intrados 52 et vers l'extrados 54 de l'aube 26. Son épaisseur peut être égale à l'épaisseur maximale de la pale. La portion amont 46 peut être une portion surfacique, tel un plaquage sur la portion de bord d'attaque 38 de la pale. La portion amont 46 peut être une coquille 46 qui forme un bouclier contre l'érosion et contre les ingestions. La portion amont 46 peut recouvrir le corps 36, éventuellement chacune de ses portions. Ou encore, la portion amont 46 peut être une tige de matière formant un épaississement, un bourrelet, sur le bord amont de la feuille 70.

La portion amont 46 peut former une cornière ou une gouttière tel un demi-tube. La portion amont 46 peut recouvrir les deux faces de la feuille 70. Elle délimite une zone dans laquelle la feuille 70 se lie à la portion amont 46 au droit du bord d'attaque 38. De la matière du corps 36 peut être logée entre la feuille 70 et une aile de la portion amont 46.

La feuille 70 forme une couche intercalaire entre les parties du corps 36. Elle est en contact du corps 36. Elle peut séparer le corps 36 en deux parties généralement égales. Sur la majorité de la longueur d'au moins un profil de l'aube 26, la feuille 70 présente une zone où les épaisseurs des parties de corps sont égales. La ligne de cambrure moyenne 66 peut être disposée dans l'épaisseur de la feuille 70, éventuellement au milieu. Eventuellement, les faces de la feuille 70 sont parallèles à la ligne de cambrure moyenne 66. Optionnellement, les propriétés décrites ci-avant s'observent sur la majorité de la longueur de la feuille 70 ou sur toute sa longueur.

La feuille 70 présente une épaisseur constante, éventuellement sur généralement toute sa surface. L'épaisseur de la feuille peut être comprise entre 0,05 mm et 2,00 mm, préférentiellement comprise entre 0,10 mm et 0,50 mm. La feuille 70 peut présenter une épaisseur constante là où elle est recouverte par le corps 36. Ses surfaces propres, autour des ouvertures peuvent être essentiellement lisses et/ou plates. Elle peut former une tôle qui est voilée et/ou vrillée, et/ou localement bombée. Ses faces intrados et extrados épousent les portions du corps 36.

## Revendications

1. Aube (24 ; 26) composite de turbomachine (2), notamment de compresseur (4 ; 6) de turbomachine axiale (2), l'aube (24 ; 26) comprenant :
- une pale (34) destinée à s'étendre radialement dans un flux (18) de la turbomachine (2), la pale (34) comportant un bord d'attaque (38), un bord de fuite (40) et un corps (36) placé entre le bord d'attaque (38) et le bord de fuite (40) ; et
- un renfort (42) formant le bord d'attaque (38) de la pale ;
**caractérisée en ce que**
le renfort (42) du bord d'attaque comprend une feuille de renfort (70) avec une épaisseur essentiellement constante, qui s'étend du bord d'attaque (38) au bord de fuite (40), qui forme le bord de fuite (40) de l'aube (24 ; 26) et qui est disposée dans l'épaisseur du corps (36) de sorte à le traverser.

2. Aube (24 ; 26) selon la revendication 1, **caractérisée en ce que** la pale (34) comprend une surface intrados (52) et une surface extrados (54) qui s'étendent du bord d'attaque (38) au bord de fuite (40), la feuille (70) balayant la majorité, préférentiellement essentiellement toute la surface intrados (52) et toute la surface extrados (54) de l'aube (24 ; 26), éventuellement le corps forme au moins partiellement la surface intrados et/ou la surface extrados de la pale.

3. Aube (24 ; 26) selon l'une des revendications 1 à 2, **caractérisée en ce que** le renfort (42) comprend une portion amont (46), notamment une coquille de protection (46), formant le bord d'attaque (38) de l'aube (24 ; 26), la feuille (70) et ladite portion amont (46) étant joints, préférentiellement la feuille (70) et ladite portion amont (46) sont venues de matière.

4. Aube (24 ; 26) selon la revendication 3, **caractérisée en ce que** la portion amont (46) forme une couche de matière d'épaisseur majoritairement constante, éventuellement la feuille (70) s'étend davantage en aval que le corps (36).

5. Aube (24 ; 26) selon l'une des revendications 1 à 4, **caractérisée en ce que** la feuille (70) comprend un matériau granuleux, préférentiellement le renfort (42) est réalisé par fabrication additive, éventuellement à base de poudre.

6. Aube (24 ; 26) selon l'une des revendications 1 à 5, **caractérisée en ce que** la feuille (70) est métallique, elle peut comprendre du titane ; et le corps (36) est réalisé en un matériau polymère, éventuellement chargé en fibres.

7. Aube (24 ; 26) selon l'une des revendications 1 à 6, **caractérisée en ce que** le renfort (42) forme un insert au moins partiellement disposé dans le corps (36), la feuille (70) séparant le corps (36) en deux parties, le renfort (42) comprend des ouvertures (44) formées dans la feuille (70), préférentiellement les parties du corps (36) présentent une continuité de matière via les ouvertures (44).

8. Aube (24 ; 26) selon l'une des revendications 1 à 7, **caractérisée en ce que** le corps (36) recouvre les deux faces de la feuille (70), préférentiellement sur la majorité de la surface de chaque face de feuille (70).

9. Aube (24 ; 26) selon l'une des revendications 1 à 8, **caractérisée en ce que** la feuille (70) est une tôle qui divise le corps (36), et la feuille (70) s'étend sur toute la hauteur radiale du bord d'attaque (38) et/ou toute la hauteur radiale du bord de fuite (40) de l'aube.

10. Aube (24 ; 26) selon l'une des revendications 1 à 9, **caractérisée en ce que** le corps (36) présente un empilement radial de profils aérodynamiques avec des lignes de cambrure moyennes (66), au moins une ou chaque ligne de cambrure moyenne (66) étant disposée dans l'épaisseur de la feuille (70), et/ou au moins une ou chaque ligne de cambrure moyenne (66) étant parallèle à la feuille (70).

11. Aube (24 ; 26) selon l'une des revendications 1 à 10, **caractérisée en ce qu'**elle comprend une plateforme de fixation (30) délimitant radialement le renfort (42), la plateforme (30) et le renfort (42) étant venus de matière, éventuellement la plateforme (30) comprend une plaque avec un rebord (56) de sorte à délimiter un espace à l'intérieur de la plateforme (30).

12. Aube (24 ; 26) selon l'une des revendications 1 à 11, **caractérisée en ce qu'**elle comprend une languette de fixation (48), éventuellement disposée radialement à l'opposé de la plateforme de fixation (30), la languette de fixation (48) prolonge radialement la feuille (70) et comprend des moyens de fixation (50), tel un orifice de fixation, destiné à coopérer avec une virole interne statorique.

13. Aube (24 ; 26) selon la revendication 12, **caractérisée en ce que** la plateforme (70) comprend des nervures de renfort (60) en surépaisseur de la plaque de la plateforme (30) et qui s'étendent jusqu'au niveau de la feuille (70), et/ou une structure en treillis tridimensionnel (62) renforçant la plateforme, et/ou un bloc massif destiné à être soudé à un support.

14. Aube (24 ; 26) selon l'une des revendications 12 à 13, **caractérisée en ce que** la plateforme (30) comprend un prolongement (58) de la feuille (70), la plaque de la plateforme séparant la feuille (70) du prolongement (58), le prolongement (58) étant entouré par le rebord (56) de la plaque, éventuellement la plateforme (30) comprend un axe de fixation (32) joint au prolongement (58) de la feuille (70), ou l'axe de fixation (32) est à distance radialement du prolongement de la feuille.

15. Turbomachine (2) comprenant au moins une aube (24 ; 26), **caractérisée en ce que** la au moins une aube (24 ; 26) est conforme à l'une des revendications 1 à 14, préférentiellement ladite aube (26) est une aube de redresseur de compresseur basse pression (4).

## Patentansprüche

1. Kompositschaufel (24; 26) einer Turbomaschine (2), insbesondere eines Kompressors (4; 6) einer axialen Turbomaschine (2), wobei die Schaufel (24; 26) umfasst:
- ein Schaufelblatt (34), das dazu vorgesehen ist, sich radial in einem Fluss (18) der Turbomaschine (2) zu erstrecken, wobei das Schaufelblatt (34) eine Vorderkante (38), eine Hinterkante (40) und einen Körper (36) umfasst, der zwischen der Vorderkante (38) und der Hinterkante (40) platziert ist, und
- eine Verstärkung (42), die die Vorderkante (38) des Schaufelblattes bildet; **gekennzeichnet dadurch, dass**
die Verstärkung (42) der Vorderkante ein Verstärkungsblatt (70) mit einer im Wesentlichen konstanten Dicke umfasst, das sich von der Vorderkante (38) zur Hinterkante erstreckt (40), die die Hinterkante (40) der Schaufel (24; 26) bildet und die in der Dicke des Körpers (36) angeordnet ist, um ihn zu durchqueren.

2. Schaufel (24, 26) gemäß Anspruch 1, **gekennzeichnet dadurch, dass** das Schaufelblatt (34) eine innenseitige Oberfläche (52) und eine außenseitige Oberfläche (54) umfasst, die sich von der Vorderkante (38) zu der Hinterkante (40) erstrecken, wobei das Blatt (70) den Großteil, vorzugsweise im Wesentlichen die gesamte innenseitige Oberfläche (52) und die gesamte außenseitige Oberfläche (54) der Schaufel (24; 26) überstreicht, wobei der Körper möglicherweise mindestens teilweise die innenseitige Oberfläche und/oder die außenseitige Oberfläche des Schaufelblattes bildet.

3. Schaufel (24, 26) gemäß einem der Ansprüche 1 bis 2, **gekennzeichnet dadurch, dass** die Verstärkung (42) einen stromaufwärtigen Teil (46), insbesondere eine Schutzhülle (46), umfasst, die die Vorderkante (38) der Schaufel (24; 26) bildet, wobei das Blatt (70) und der besagte stromaufwärtige Teil (46) miteinander verbunden sind, wobei vorzugsweise das Blatt (70) und der besagte stromaufwärtige Teil (46) einstückig sind.

4. Schaufel (24, 26) gemäß Anspruch 3, **gekennzeichnet dadurch, dass** der stromaufwärtige Teil (46) eine Materialschicht mit einer im Großteil konstanten Dicke bildet, wobei möglicherweise das Blatt (70) sich weiter stromabwärts erstreckt als der Körper (36).

5. Schaufel (24, 26) gemäß einem der Ansprüche 1 bis 4, **gekennzeichnet dadurch, dass** das Blatt (70) ein granuläres Material umfasst, wobei die Verstärkung (42) vorzugsweise durch additive Herstellung gemacht ist, möglicherweise auf Basis von Pulver.

6. Schaufel (24, 26) gemäß einem der Ansprüche 1 bis 5, **gekennzeichnet dadurch, dass** das Blatt (70) metallisch ist und dass es Titan enthalten kann; und dass der Körper (36) aus einem Polymermaterial gemacht ist, möglicherweise mit Faserverstärkung.

7. Schaufel (24, 26) gemäß einem der Ansprüche 1 bis 6, **gekennzeichnet dadurch, dass** die Verstärkung (42) einen Einsatz bildet, der zumindest teilweise in dem Körper (36) angeordnet ist, wobei das Blatt (70) den Körper (36) in zwei Teile teilt, wobei die Verstärkung (42) Öffnungen (44) umfasst, die in dem Blatt (70) gebildet sind, wobei vorzugsweise die Teile des Körpers (36) über die Öffnungen (44) eine Materialkontinuität zeigen.

8. Schaufel (24, 26) gemäß einem der Ansprüche 1 bis 7, **gekennzeichnet dadurch, dass** der Körper (36) die beiden Seiten des Blattes (70) bedeckt, vorzugsweise über den Großteil der Oberfläche von jeder Seite des Blattes (70).

9. Schaufel (24, 26) gemäß einem der Ansprüche 1 bis 8, **gekennzeichnet dadurch, dass** das Blatt (70) ein Blech ist, das den Körper (36) teilt, und dass sich das Blatt (70) über die gesamte radiale Höhe der Vorderkante (38) und/oder die gesamte radiale Höhe der Hinterkante (40) der Schaufel erstreckt.

10. Schaufel (24, 26) gemäß einem der Ansprüche 1 bis 9, **gekennzeichnet dadurch, dass** der Körper (36) einen radialen Stapel von aerodynamischen Profilen mit mittleren Krümmungslinien (66) hat, wobei mindestens eine oder jede mittlere Krümmungslinie (66) in der Dicke des Blattes (70) angeordnet ist, und/oder dass mindestens eine oder jede mittlere Krümmungslinie (66) parallel zu dem Blatt (70) ist.

11. Schaufel (24, 26) gemäß einem der Ansprüche 1 bis 10, **gekennzeichnet dadurch, dass** sie eine Befestigungsplattform (30) umfasst, die radial die Verstärkung (42) begrenzt, wobei die Plattform (30) und die Verstärkung (42) einstückig sind, wobei die Plattform (30) möglicherweise eine Platte mit einem Rand (56) umfasst, um so den Raum im Inneren der Plattform (30) zu begrenzen.

12. Schaufel (24, 26) gemäß einem der Ansprüche 1 bis 11, **gekennzeichnet dadurch, dass** sie eine Befestigungslasche (48) umfasst, die möglicherweise radial gegenüber der Befestigungsplattform (30) angeordnet ist, wobei die Befestigungslasche (48) das Blatt (70) radial verlängert und Befestigungsmittel (50) wie eine Befestigungsöffnung umfasst, die dazu bestimmt sind, mit einer inneren Statorummantelung zusammenzuwirken.

13. Schaufel (24, 26) gemäß Anspruch 12, **gekennzeichnet dadurch, dass** die Plattform (30) Verstärkungsrippen (60) als Verdickung der Platte der Plattform (30) umfasst, die sich bis auf das Niveau des Blattes (70) erstrecken, und/oder eine dreidimensionale Gitterstruktur (62), die die Plattform verstärkt, und/oder einen massiven Block, der dazu bestimmt ist, mit einem Träger verschweißt zu sein.

14. Schaufel (24, 26) gemäß einem der Ansprüche 12 bis 13, **gekennzeichnet dadurch, dass** die Plattform (30) eine Verlängerung (58) des Blattes (70) umfasst, wobei die Platte der Plattform das Blatt (70) von der Verlängerung (58) trennt, wobei die Verlängerung (58) von dem Rand (56) der Platte umgeben ist, wobei die Plattform (30) möglicherweise eine Befestigungsachse (32) umfasst, die mit der Verlängerung (58) des Blattes (70) verbunden ist, oder wobei die Befestigungsachse (32) radial von der Verlängerung des Blattes beabstandet ist.

15. Turbomaschine (2) umfassend mindestens eine Schaufel (24; 26), **gekennzeichnet dadurch, dass** die zumindest eine Schaufel (24; 26) gemäß einem der Ansprüche 1 bis 14 ist, wobei die besagte Schaufel (26) vorzugsweise eine Schaufel eines Gleichrichters eines Niederdruckkompressors (4) ist.

## Claims

1. Composite blade (24; 26) for a turbomachine (2), in particular for a compressor (4; 6) of an axial-flow turbomachine (2), the blade (24; 26) comprising:
- a vane (34) intended to extend radially into a flow (18) of the turbomachine (2), the vane (34) including a leading edge (38), a trailing edge (40) and a body (36) positioned between the leading edge (38) and the trailing edge (40); and
- a reinforcement (42) forming the leading edge (38) of the vane,
**characterized in that**
the reinforcement (42) of the leading edge comprises a reinforcing sheet (70) having an essentially constant thickness, which extends from the leading edge (38) to the trailing edge (40), which forms the leading edge (38) of the blade (24; 26) and which is arranged in the thickness of the body (36) so as to pass through it.

2. Blade (24; 26) according to claim 1, **characterized in that** the vane (34) comprises an intrados surface (52) and an extrados surface (54) which extend from the leading edge (38) to the trailing edge (40), the sheet (70) sweeping the majority, preferably essentially the whole of the intrados surface (52) and the whole of the extrados surface (54) of the blade (24; 26), the body possibly forming, at least partially, the intrados surface and/or the extrados surface of the vane.

3. Blade (24; 26) according to one of claims 1 to 2, **characterized in that** the reinforcement (42) comprises an upstream portion (46), in particular a protective shell (46), forming the leading edge (38) of the blade (24; 26), the sheet (70) and said upstream portion (46) being joined, the sheet (70) and said upstream portion (46) preferably being integrally formed.

4. Blade (24; 26) according to claim 3, **characterized in that** the upstream portion (46) forms a layer of material of a thickness that is for the most part constant, the sheet (70) possibly extending further downstream than the body (36).

5. Blade (24; 26) according to one of claims 1 to 4, **characterized in that** the sheet (70) comprises a granular material, the reinforcement (42) preferably being made by additive manufacturing, possibly powder-based.

6. Blade (24; 26) according to one of claims 1 to 5, **characterized in that** the sheet (70) is metallic, and may comprise titanium, and the body (36) is made of a polymer material, possibly charged with fibres.

7. Blade (24; 26) according to one of claims 1 to 6, **characterized in that** the reinforcement (42) forms an insert arranged at least partially in the body (36), the sheet (70) separating the body (36) into two parts, the reinforcement (42) comprising apertures (44) formed in the sheet (70), the parts of the body (36) preferably exhibiting a continuity of material via the apertures (44).

8. Blade (24; 26) according to one of claims 1 to 7, **characterized in that** the body (36) covers the two faces of the sheet (70), preferably on the majority of the surface of each face of the sheet (70).

9. Blade (24; 26) according to one of claims 1 to 8, **characterized in that** the sheet (70) is a sheet which divides the body (36), and the sheet (70) extends for the whole of the radial height of the leading edge (38) and/or the whole of the radial height of the trailing edge (40) of the blade.

10. Blade (24; 26) according to one of claims 1 to 9, **characterized in that** the body (36) exhibits a radial stack of aerodynamic profiles having mean camber lines (66), at least one or each mean camber line (66) being arranged in the thickness of the sheet (70), and/or at least one or each mean camber line (66) being parallel to the sheet (70).

11. Blade (24; 26) according to one of claims 1 to 10, **characterized in that** it comprises a locking platform (30) delimiting the reinforcement (42) radially, the platform (30) and the reinforcement (42) being made of the same material, the platform (30) possibly comprising a plate having an edge (56) such as to delimit a space in the interior of the platform (30).

12. Blade (24; 26) according to one of claims 1 to 11, **characterized in that** it comprises a locking tab (48), possibly arranged radially on the other side of the locking platform (30), the locking tab (48) extending the sheet radially (70) and comprising locking means (50), such as a locking aperture, intended to interact with an internal stator shroud.

13. Blade (24; 26) according to claim 12, **characterized in that** the platform (70) comprises reinforcement ribs (60) as an additional material thickness on the plate of the platform (30) and which extend as far as the area of the sheet (70), and/or a three-dimensional space-frame structure (62) reinforcing the platform, and/or a solid block intended to be welded to a support.

14. Blade (24; 26) according to one of claims 12 to 13, **characterized in that** the platform (30) comprises an extension (58) of the sheet (70), the plate of the platform separating the sheet (70) from the extension (58), the extension (58) being surrounded by the edge (56) of the plate, the platform (30) possibly comprising a locking pin (32) connected to the extension (58) of the sheet (70), or the locking pin (32) being situated at a distance radially from the extension of the sheet.

15. Turbomachine (2) comprising at least one blade (24; 26), **characterized in that** the at least one blade (24; 26) is according to one of claims 1 to 14, said blade (26) preferably being a blade of a rectifier of a low-pressure compressor (4).
